# DEMANDE DE BREVET EUROPEEN

(11) **EP 4 844 144 A1**
(43) Date de publication de la demande: **25.11.2026**
(21) Numéro de dépôt: 26174862.8
(22) Date de dépôt: 27.04.2026
(51) Int. Cl.: E03D 1/16, F16L 45/00, E03D 11/13, E03D 11/16, E03C 1/122, F16L 41/02

(54) **RACCORD POUR ÉVACUATION D'EAU D'UNE TOILETTE**

(30) Priorité: 22.05.2025 FR 2505505
(71) Demandeur: Wirquin Plastiques, 44470 Carquefou (FR)
(72) Inventeur: BACOUET, Alban, 44980 Sainte Luce sur Loire (FR); LE BIHAN, Gaël, 44000 Nantes (FR); LE GUEN, Vincent, 44330 Mouzillon (FR); LE ROY, Cédric, 44470 Carquefou (FR)
(74) Mandataire: Lequien, Philippe

(57) **Abrégé**

L'invention concerne un raccord (1) pour évacuation d'eau d'une toilette, le raccord (1) comprenant :
- un corps (10) aboutable directement à un tube d'évacuation s'étendant d'une cuvette, le corps (10) s'étendant entre un orifice d'entrée d'eau (11) destiné à recevoir le tube d'évacuation et un orifice de sortie d'eau (12), le corps (10) délimitant un volume interne d'évacuation d'eau s'étendant le long d'une trajectoire d'écoulement depuis l'orifice d'entrée d'eau (11) jusqu'à l'orifice de sortie d'eau (12) ;
- un point de raccordement (13) venu de matière avec le corps (10) et situé le long du corps (10).

## Description

### Domaine Technique

Le domaine technique de l'invention est celui de la conception et de la fabrication d'équipements d'évacuation d'appareils sanitaires.

### État de la technique

Dans le domaine des équipements sanitaires, les conduites permettent d'évacuer les eaux souillées depuis un module sanitaire, tel qu'un WC ou un lavabo, vers un réseau commun de canalisations.

Toutefois, pour améliorer l'entretien de la conduite d'évacuation pour une bonne évacuation des eaux souillées, et notamment éviter leur bouchage et le cas échéant les remontées d'odeurs, les conduites sont équipées d'un emmanchement pour un raccord, que ce soit un bouchon ou une prise d'air.

Ainsi, grâce à cet emmanchement, un accès est possible à la partie interne de la conduite et également le raccordement de divers composants, tels une conduite d'évacuation venant d'un lave-main, une conduite pour mise à l'air libre, un bouchon, un organe de prise d'air.

Généralement, il existe des tés sur lesquels on vient raccorder les éléments souhaités, ce dans différents diamètres.

Plus particulièrement, il existe des pipes de raccordement sur cuvette WC, qui comprennent un piquage pour pourvoir raccorder une conduite ou un élément de prise d'air, qu'il soit libre (élément de tuyauterie ouvert) ou par clapet à ouverture sur dépression.

Cependant, tous ces piquages sur pipe WC sont directement ouverts sur la conduite, sans paroi de protection.

Une paroi de protection permet d'éviter de souiller la partie accessible lors de l'évacuation des eaux souillées du WC.

Il est connu dans l'art antérieur des solutions techniques objets de commercialisation et/ou de brevets.

Le brevet EP3945168 évoque une paroi déflectrice amovible, laissant un passage entre cette partie amovible et l'intérieur de la conduite. Le fait d'être amovible ne garantit pas la tenue dans le temps de cette pièce dans son logement, surtout si elle est souillée. De même c'est une pièce rapportée. L'invention palie à ce problème.

Le brevet EP3704320 décrit un siphon avec un déflecteur fixe entre un orifice extérieur et la conduite d'évacuation. Ce produit mentionne un siphon de lavabo ou d'évier et non un raccord pour raccordement sur WC (pipe WC). Dans cette proposition, il n'est pas possible d'accéder à l'intérieur de la conduite d'évacuation.

Le brevet US 3 346 887 expose une conduite d'évacuation avec un raccordement, séparés par une paroi fixe. Ce n'est pas un coude se raccordant sur une cuvette WC, comprenant un joint. D'autre part, l'entrée et la sortie de la conduite sont toutes les deux soit parallèles, soit sensiblement à angle droit. Aucun des raccordements ne comprend de filetage extérieur pour raccordement d'un bouchon.

Le brevet EP3540139 concerne une conduite d'évacuation, plus particulièrement une pipe WC comprenant un piquage avec un clapet de mise à l'air libre. Cette pipe de raccordement à une cuvette WC ne comprend pas de déflecteur qui évite, plus particulièrement lorsque le coude est orienté latéralement, le flux d'évacuation d'eau souillée qui peut venir au contact du clapet d'entrée d'air.

### Problème technique

L'invention a notamment pour objectif de pallier ces inconvénients de l'art antérieur.

Plus précisément, l'invention a pour objectif de proposer un raccord pour évacuation muni d'un piquage, sans les inconvénients relatifs au piquage.

### Résumé de l'invention

Ces objectifs, ainsi que d'autres qui apparaîtront par la suite, sont atteints grâce à l'invention qui a pour objet un raccord pour évacuation d'eau d'une toilette, le raccord comprenant :
- un corps aboutable directement à un tube d'évacuation s'étendant d'une cuvette, le corps s'étendant entre un orifice d'entrée d'eau destiné à recevoir le tube d'évacuation et un orifice de sortie d'eau, le corps délimitant un volume interne d'évacuation d'eau s'étendant le long d'une trajectoire d'écoulement depuis l'orifice d'entrée d'eau jusqu'à l'orifice de sortie d'eau ;
- un point de raccordement venu de matière avec le corps et situé le long du corps,

caractérisé en ce que le raccord comprend un déflecteur s'étendant dans le corps et étant venu de matière avec le corps, le point de raccordement débouchant dans le corps directement sur le déflecteur, le déflecteur s'étendant depuis une première extrémité située en amont du point de raccordement par rapport à la trajectoire d'écoulement et couplée sur une face interne du corps, jusqu'à un bord libre situé en aval du point de raccordement par rapport à la trajectoire d'écoulement, le point de raccordement débouchant dans le volume interne d'évacuation au niveau du bord libre du déflecteur,
et en ce que le déflecteur est couplé sur la face interne du corps sur ses deux rebords latéraux qui s'étendent entre sa première extrémité et son bord libre,
et en ce que le déflecteur est configuré pour diviser au moins une partie d'un flux d'eau en provenance de l'orifice d'entrée d'eau, de part et d'autre d'un plan médian du déflecteur.

Le déflecteur est situé à l'intérieur du corps du raccord et permet de protéger le point de raccordement des saletés contenues dans l'eau évacuée par le raccord. En effet, de telles saletés seraient susceptibles obstruer le point de raccordement lors d'une chasse.

Le déflecteur est conçu directement avec le corps, sorti de fabrication de matière en une seule et même pièce. Cette solution permet d'avoir une solidité et rigidité de l'ensemble, et un positionnement parfait du déflecteur dans le corps.

Cela permet de favoriser le bon écoulement du flux d'eau dans la tubulure et d'éviter qu'une partie du flux d'eau, généralement de l'eau souillée, ne puisse atteindre le point de raccordement.

Le couplage du déflecteur par le biais de ses deux rebords latéraux permet également de favoriser le bon écoulement du flux d'eau, notamment quand le raccord n'est pas couplé avec son point de raccordement parfaitement à l'aplomb de l'axe central de l'orifice d'entrée d'eau du raccord (une angulation allant jusqu'à +90° ou -90° par rapport à la verticale étant envisageable).

Le fait que le déflecteur soit configuré pour diviser au moins une partie d'un flux d'eau limite l'accumulation de déchets dans cette partie du raccord.

Selon une caractéristique avantageuse, le déflecteur présente, le long de la trajectoire d'écoulement, courbure faisant saillie vers le volume interne d'évacuation.

Cette géométrie particulière permet de créer l'effet séparateur de flux. Il permet également de produire une accélération bilatérale d'un flux d'eau sur les parois du corps du fait de l'arrondi intérieur du déflecteur.

Une telle géométrie permet donc de favoriser l'écoulement du flux d'eau : la courbure accompagne le flux d'eau sans changer sa direction de manière brutale. Ainsi, les risques de pertes de charge ou de difficulté d'écoulement d'eau dans le raccord sont limités, surtout avec un effet accélérateur en deux flux latéraux parallèles. Cela renforce également la capacité du raccord à limiter l'accumulation de déchets dans cette partie du raccord.

Selon une conception préférée, la courbure s'étend d'un rebord latéral du déflecteur à l'autre rebord latéral.

Selon un mode de réalisation préféré, la courbure présente un rayon de courbure d'une valeur de 2/3 ± 10% du diamètre interne du corps.

Ceci participe à éviter une restriction trop importante du volume interne d'évacuation qui limiterait le flux de sortie d'eau usées et ses impératifs normatifs.

Avantageusement, le déflecteur ménage avec le corps, au moins un passage tubulaire d'un diamètre d'au moins 25mm entre le point de raccordement et le volume interne d'évacuation.

Ceci permet le passage d'un furet de nettoyage.

Préférentiellement, un diamètre maximum de 40 mm pour le passage tubulaire est retenu, pour ne pas avoir une restriction trop importante qui limiterait le flux de sortie d'eau usées et les impératifs normatifs.

Avantageusement, l'orifice de sortie s'inscrit dans un plan formant un angle « α » de 45±5 degrés par rapport à un plan dans lequel s'inscrit l'orifice d'entrée d'eau, le point de raccordement présentant une section tubulaire s'étendant autour d'un axe central parallèle au plan de l'orifice d'entrée d'eau.

L'invention a également pour objet un système de toilette, comprenant une cuvette et un tube d'évacuation s'étendant depuis la cuvette, caractérisé en ce qu'il comprend également le raccord tel que défini précédemment, le corps du raccord étant abouté directement au tube d'évacuation par son orifice d'entrée d'eau.

### Brève description des dessins

D'autres caractéristiques et avantages de l'invention apparaîtront plus clairement à la lecture de la description suivante de différents modes de réalisation préférentiels de l'invention, donnés à titre d'exemples illustratifs et non limitatifs, et des dessins annexés parmi lesquels :
- [Fig. 1] la figure 1 est une représentation schématique vu de côté d'un raccord selon l'invention ;
- [Fig. 2] la figure 2 est une représentation schématique vu de dessus du raccord selon l'invention ;
- [Fig. 3] la figure 3 est une représentation schématique selon une coupe longitudinale médiane du raccord selon l'invention ;
- [Fig. 4] la figure 4 est une vue de détail de la figure 4 centrée sur une partie d'un corps du raccord selon l'invention ;
- [Fig. 5] la figure 5 est une représentation schématique en perspective du corps depuis un orifice d'entrée d'eau ;
- [Fig. 6] la figure 6 est une représentation schématique en perspective du corps depuis un orifice de sortie d'eau ;

### Description détaillée

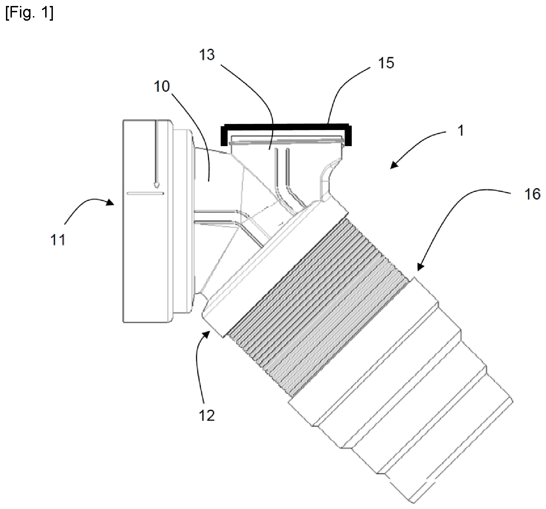

En référence aux figures 1 à 3, un raccord 1 pour évacuation d'eau d'une toilette est représenté.

Le raccord 1 comprend un corps 10 aboutable directement à un tube d'évacuation s'étendant d'une cuvette.

Ce corps 10 est du type « pipe d'évacuation ».

Le corps 10 comprend un orifice d'entrée d'eau 11 et un orifice de sortie d'eau 12. L'orifice d'entrée d'eau 11 destiné à recevoir le tube d'évacuation d'une cuvette de WC.

Bien que cela ne soit pas représenté, l'invention concerne également un système de toilette, comprenant une cuvette, un tube d'évacuation s'étendant depuis la cuvette, et le raccord 1. Le corps 10 du raccord 1 est abouté directement au tube d'évacuation par son orifice d'entrée d'eau 11.

Le corps 10 s'étend longitudinalement entre l'orifice d'entrée d'eau 11 et l'orifice de sortie d'eau 12. Ce corps 10 prend notamment la forme d'une tubulure entre l'orifice d'entrée d'eau 11 et l'orifice de sortie d'eau 12.

Le corps 10 délimite un volume interne d'évacuation d'eau s'étendant le long d'une trajectoire d'écoulement depuis l'orifice d'entrée d'eau 11 jusqu'à l'orifice de sortie d'eau 12.

Par ailleurs, l'orifice de sortie 12 s'inscrit dans un plan B et l'orifice d'entrée d'eau 11 s'inscrit dans un plan A. Le plan B forme un angle « α » de 45±5 degrés par rapport à au plan A dans lequel s'inscrit l'orifice d'entrée d'eau 11.

Selon un mode de réalisation envisageable non représenté, il est possible que les plans A et B puissent être parallèles, c'est-à-dire que le raccord 1 soit non coudé avec une sortie droite dans la continuité de l'axe de l'orifice d'entrée d'eau 11.

Le corps 10 est notamment formé en plastique.

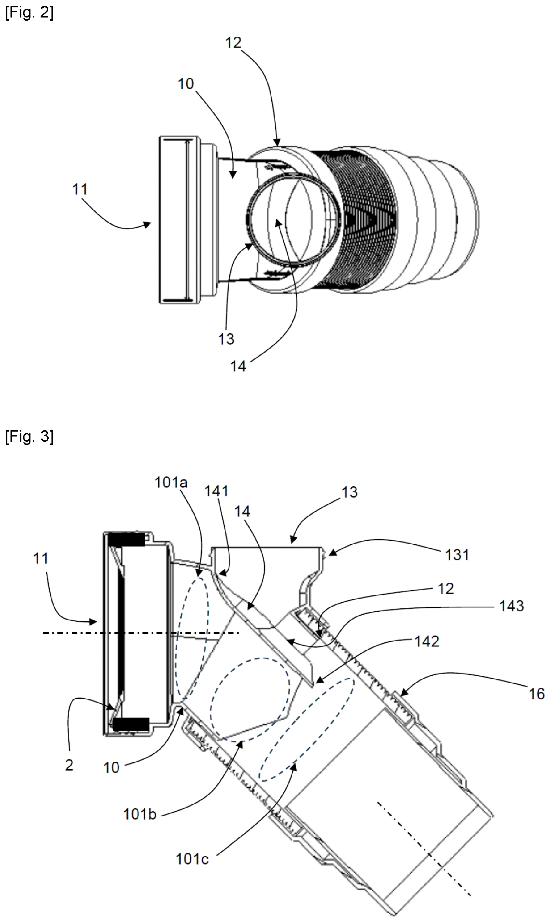

Le raccord 1 comprend également un joint d'étanchéité 2 (visible sur la figure 3) pour raccordement sur la cuvette WC.

Le raccord 1 comprend également, un ensemble de conduites 16 en sortie, rigide ou souple, assemblés par collage ou soudage sur la sortie d'eau 12.

Un exemple préférentiel est représenté sur les figures 1 à 3 dans lequel l'ensemble de conduites 16 présente une géométrie souple extensible.

Il est possible de prévoir différents raccordements 16 en sortie 12 par mise en opération, tels une gaine flexible ou un raccord quelconque non représenté.

En référence aux figures 1 à 6, le raccord comprend également un point de raccordement 13.

Ce point de raccordement 13 est venu de matière avec le corps 10 et situé le long du corps 10. Le point de raccordement 13 est intercalé entre l'orifice d'entrée d'eau 11 et l'orifice de sortie d'eau 12.

Le point de raccordement 13 présente une section tubulaire s'étendant autour d'un axe central. Cet axe central est parallèle au plan A de l'orifice d'entrée d'eau 11.

Tel qu'illustré sur les figures 3, 5, 6, le point de raccordement 13 comporte un filet extérieur 131.

En référence à la figure 1, le raccord 1 peut comprend un bouchon 15 destiné à venir se monter sur la section tubulaire du point de raccordement 13 en étant vissé sur ce filet extérieur 131.

En effet, il convient d'avoir un mode démontable, avec une tenue mécanique tel un vissage, pour permettre un accès à l'intérieur du corps 10 du raccord 1, par exemple pour le nettoyage.

En référence aux figures 2 à 6, le raccord 1 comprend également un déflecteur 14.

Le déflecteur 14 s'étend dans le corps 10 et est venu de matière avec le corps 10.

Tel que cela apparaît par la suite, le déflecteur 14 prend la forme d'une paroi interne au corps 10.

Le point de raccordement 13 débouche dans le corps 10 directement sur le déflecteur 14.

Plus précisément, selon le présent mode de réalisation, le déflecteur 14 s'étend au moins entièrement dans la projection de la section tubulaire du point de raccordement 13, selon l'axe central de la section tubulaire.

Ce déflecteur 14 s'étend depuis une première extrémité 141 jusqu'à un bord libre 142.

La première extrémité 141 est située en amont du point de raccordement 13 par rapport à la trajectoire d'écoulement. Plus précisément, la première extrémité 141 est située à la base du point de raccordement 13 sur le corps 10.

Cette première extrémité est couplée sur une face interne du corps 10.

Le bord libre 142 est situé en aval du point de raccordement 13 par rapport à la trajectoire d'écoulement.

Le déflecteur 14 est également couplé sur la face interne du corps 10 sur ses deux rebords latéraux 143 qui s'étendent entre sa première extrémité 141 et son bord libre 142.

Le point de raccordement 13 débouche ainsi dans le volume interne d'évacuation au niveau du bord libre 142 du déflecteur 14.

En référence à la figure 3, il peut être considéré que le corps 10 se décompose au moins en trois parties, une partie amont 101a en amont du déflecteur 14, une partie centrale 101b au droit du déflecteur 14, et une partie aval 101c en aval du déflecteur 14.

Tel qu'illustré sur les figures, le point de raccordement 13 est intercalé entre l'orifice d'entrée d'eau 11 et l'orifice de sortie d'eau 12. Le déflecteur permet ainsi de le protéger des eaux souillées circulant dans le corps 10, notamment pour éviter que le bouchon 15 ne soit salit par de saletés contenues par les eaux évacuées, et que le point de raccordement 13 ne soit obstrué.

Le déflecteur 14 est configuré pour diviser au moins une partie d'un flux d'eau en provenance de l'orifice d'entrée d'eau 11, de part et d'autre d'un plan médian du déflecteur 14.

En effet, le déflecteur 14 présente, le long de la trajectoire d'écoulement, une courbure faisant saillie vers le volume interne d'évacuation. En d'autres termes, la courbure présentée par le déflecteur 14 présente une concavité dont le creux est ouvert vers le point de raccordement 13, de manière que le dos de la courbure soit présenté vers le volume interne d'évacuation d'eau.

Selon le présent mode de réalisation, la courbure s'étend d'un rebord latéral 143 du déflecteur à l'autre rebord latéral 143. Le déflecteur 14 est encore plus spécifiquement courbé depuis sa première extrémité 141 jusqu'à son bord libre 142.

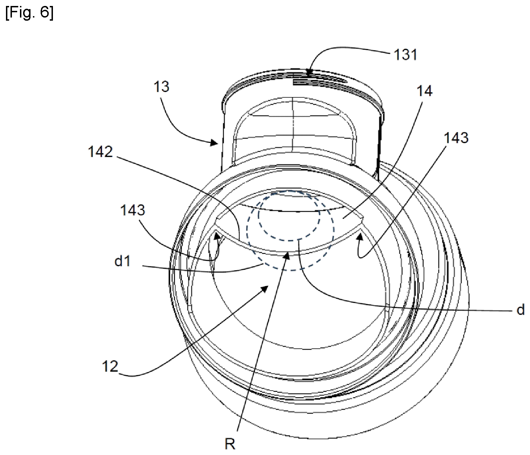

En référence à la figure 6, la courbure présente un rayon de courbure R d'une valeur de 2/3 ± 10% du diamètre interne 102 du corps 101.

Le rayon de courbure R du déflecteur 14 à la jonction de la partie centrale 101b et de la partie aval 101c possède un rayon R d'environ 64 mm pour un passage d de diamètre 25mm.

Le rayon de courbure R est d'une valeur de 2/3 ±10% du diamètre interne du corps 10 à la jonction de la partie centrale 101b et de la partie aval 101c. Dans l'exemple, le rayon de courbure R est de 64 mm pour un diamètre de l'orifice de sortie d'eau 12 de 90mm.

Selon une caractéristique avantageuse, le déflecteur 14 ménage avec le corps, au moins un passage tubulaire d'un diamètre d'au moins 25mm entre le raccordement et le volume interne d'évacuation.

Selon le présent mode de réalisation, ce passage tubulaire d'au moins 25 mm est ménagé par l'espacement entre la paroi interne du corps 10 et le déflecteur 14, au droit de la partie médiane du déflecteur 14.

Pour obtenir un passage d de 40 mm, une modification locale d1 de cette paroi déflectrice 141 est possible, tel qu'illustré par la figure 6, sans modifier pour autant le rayon de courbure R. Dans ce cas le déflecteur 14 présenterait un renflement partiellement tubulaire pour ménager le passage tubulaire.

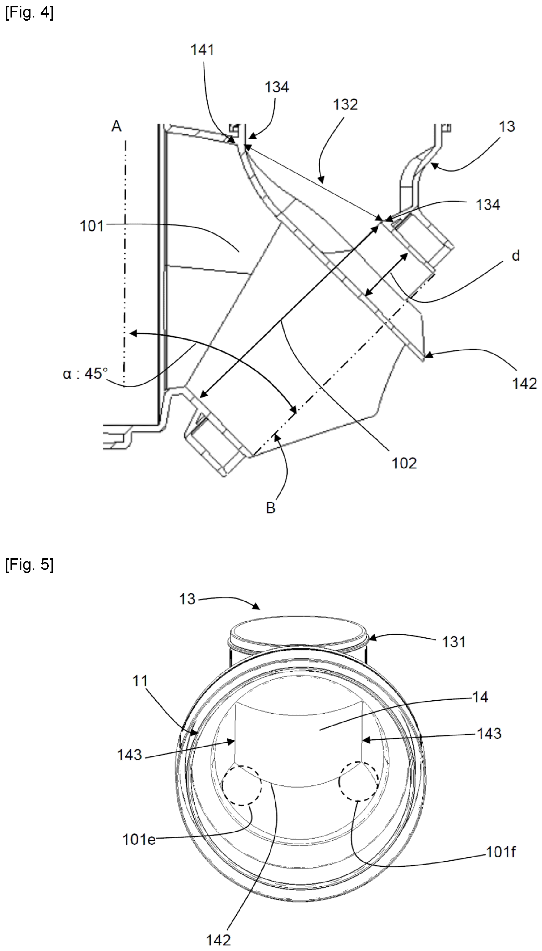

En référence à la figure 4, l'espace 132 correspond au passage situé à la base du point de raccordement 13 entre les deux extrémités 134 situées dans le prolongement du corps 10.

L'espace 132 défini entre ces deux extrémités 134 permet de laisser passer l'outil de nettoyage.

L'accès de l'espace 132 à la partie aval 101c longe le déflecteur 14 par la géométrie interne à la courbure, pour déboucher dans la conduite 16 rapportée.

Un flux d'eau souillée en provenance de l'orifice d'entrée d'eau 11 longe donc ce déflecteur 14 coté externe de sa courbure pour alimenter la conduite 16.

En référence à la figure 5, dans la partie centrale 101b, on distingue deux zones latérales 101e et 101f normales à la trajectoire d'écoulement du raccord 1 qui représentent le lieu de raccordement du déflecteur 14 avec la paroi interne du corps 10. Ces zones 101e et 101f sont destinées à recevoir les flux d'eau du fait de la forme arrondie du déflecteur 14, tel qu'évoqué précédemment.

Cette forme spécifique du déflecteur 14 dirige latéralement le flux d'eau souillée provenant de la cuvette WC. Elle permet au flux d'eau évacué de « buter » en sortant de la cuvette WC contre ce déflecteur 14, et du fait de sa courbure, de tendre à se séparer en deux flux parallèles, dirigés préférentiellement vers les zones 101e et 101f.

Plus particulièrement, tel que cela est visible sur les figures 5 et 6, la courbure du déflecteur 14 permet le guidage de l'eau évacuée depuis l'orifice d'entrée d'eau 11 vers l'orifice de sortie d'eau 12 avec pour effet supplémentaire de diriger l'eau sur les côtés vers les zones latérales 101e et 101f.

En d'autres termes, le déflecteur 14 permet d'éviter que l'eau évacuée, qui provient de l'orifice d'entrée d'eau 11, ne puisse atteindre l'orifice 132 du raccordement 13, et permet une séparation en deux directions du flux d'évacuation vers les zones latérales 101e et 101f.

## Revendications

1. Raccord (1) pour évacuation d'eau d'une toilette, le raccord (1) comprenant :
- un corps (10) aboutable directement à un tube d'évacuation s'étendant d'une cuvette, le corps (10) s'étendant entre un orifice d'entrée d'eau (11) destiné à recevoir le tube d'évacuation et un orifice de sortie d'eau (12), le corps (10) délimitant un volume interne d'évacuation d'eau s'étendant le long d'une trajectoire d'écoulement depuis l'orifice d'entrée d'eau (11) jusqu'à l'orifice de sortie d'eau (12) ;
- un point de raccordement (13) venu de matière avec le corps (10) et situé le long du corps (10),
**caractérisé en ce que** le raccord (1) comprend un déflecteur (14) s'étendant dans le corps (10) et étant venu de matière avec le corps (10), le point de raccordement (13) débouchant dans le corps (10) directement sur le déflecteur (14), le déflecteur (14) s'étendant depuis une première extrémité (141) située en amont du point de raccordement (13) par rapport à la trajectoire d'écoulement et couplée sur une face interne du corps (10), jusqu'à un bord libre (142) situé en aval du point de raccordement (13) par rapport à la trajectoire d'écoulement, le point de raccordement (13) débouchant dans le volume interne d'évacuation au niveau du bord libre (142) du déflecteur (14),
et **en ce que** le déflecteur (14) est couplé sur la face interne du corps (10) sur ses deux rebords latéraux (143) qui s'étendent entre sa première extrémité (141) et son bord libre (142),
et **en ce que** le déflecteur (14) est configuré pour diviser au moins une partie d'un flux d'eau en provenance de l'orifice d'entrée d'eau (11), de part et d'autre d'un plan médian du déflecteur (14).

2. Raccord (1) selon la revendication précédente, **caractérisé en ce que** le déflecteur (14) présente, le long de la trajectoire d'écoulement, une courbure faisant saillie vers le volume interne d'évacuation.

3. Raccord (1) selon la revendication précédente, **caractérisé en ce que** la courbure s'étend d'un rebord latéral (143) du déflecteur à l'autre rebord latéral (143).

4. Raccord (1) selon la revendication précédente, **caractérisé en ce que** la courbure présente un rayon de courbure (R) d'une valeur de 2/3 ± 10% du diamètre interne du corps (101).

5. Raccord (1) selon l'une quelconque des revendications précédentes, **caractérisé en ce que** le déflecteur (14) ménage avec le corps (10), au moins un passage tubulaire d'un diamètre d'au moins 25mm, entre le point de raccordement et le volume interne d'évacuation.

6. Raccord (1) selon l'une quelconque des revendications précédentes, **caractérisé en ce que** l'orifice de sortie (12) s'inscrit dans un plan (B) formant un angle « α » de 45±5 degrés par rapport à un plan (A) dans lequel s'inscrit l'orifice d'entrée d'eau (11), le point de raccordement présentant une section tubulaire s'étendant autour d'un axe central parallèle au plan (A) de l'orifice d'entrée d'eau (11).

7. Raccord (1) selon l'une quelconque des revendications précédentes, **caractérisé en ce que** le déflecteur (14) s'étend au moins entièrement dans la projection d'une section tubulaire du point de raccordement (13), selon un axe central de la section tubulaire.

8. Système de toilette, comprenant une cuvette et un tube d'évacuation s'étendant depuis la cuvette, **caractérisé en ce qu'**il comprend également le raccord (1) selon l'une quelconque des revendications précédentes, le corps (10) du raccord (1) étant abouté directement au tube d'évacuation par son orifice d'entrée d'eau (11).
